# EUROPEAN PATENT APPLICATION

(11) **EP 2 083 431 A1**
(43) Date of publication of application: **29.07.2009**
(21) Application number: 08394006.4
(22) Date of filing: 25.01.2008
(51) Int. Cl.: H01G 5/16

(54) **Microelectromechanical system tunable capacitor**

(71) Applicant: University College Cork-National University of Ireland, Cork, Cork (IE)
(72) Inventor: Hill, Martin, County Cork (IE); O'Mahony, Conor, County Kerry (IE)
(74) Representative: Weldon, Michael James

(57) **Abstract**

A varactor (1) of the invention comprises a substrate (2) on which an arched movable capacitance electrode (3) is supported at its ends by the contact with the substrate (2) or topographical features on the substrate, and there is a fixed capacitance electrode (4) on the substrate (2) under the movable electrode (3). Application of electrostatic forces causes the electrode (3) to deflect so that the arch shape is lowered and narrowed until it is fully in contact with the fixed electrode (4). There may be an additional pair of resilient supports (5) supporting the movable capacitance electrode (3) mid-way along its length. In this case, the supports (5) apply an additional level of control over the deflection of the movable capacitance electrode (3) towards the fixed capacitance electrode 4.

## Description

### Introduction

The invention relates to a microelectromechanical systems (MEMS) tunable capacitor or "varactor".

Variable capacitors (varactors) are used in RF systems to tune the frequency of Local Oscillators (LO), to tune filters and to optimise the impedance match between circuit stages over a range of frequencies.

At present many systems use solid state silicon or GaAs varactor diodes. These devices operate under reverse bias condition and the junction capacitance is varied by the reverse bias voltage. These devices have a quality factor (Q) of in the range 30-60 with capacitance tuning ranges from 4-6. The quality factor is limited by the diode series resistance and the parasitic capacitance to the substrate. Varactor diodes are also limited in their RF power range to ensure there is no forward conduction and they suffer from harmonic distortion effects. To achieve high Q-factors these devices may require processing steps which are not compatible with CMOS processing and may therefore not be integrated on a single substrate with the CMOS RF circuits.

The most common type of MEMS variable capacitor operates by using electrostatic forces to vary the spacing between the capacitor electrodes. MEMS tunable capacitors offer the possibility to achieve a Q factor in excess of 100 and should achieve tuning ranges comparable to or in excess of semiconductor varactors. In addition, MEMS tunable capacitors should handle more power than varactor diodes as they cannot be forward biased. They also exhibit low harmonic distortion as the device inertia prevents it from responding to RF frequencies which are 10⁴ times the device resonant frequency. Integrated with CMOS circuitry and with MEMS switches, HF frequency filters, phase shifters, inductors and micromechanical resonators, MEMS variable capacitors could contribute towards the goal of developing a single chip radio system.

Basic MEMS capacitors consist of a movable structure suspended over a fixed electrode, thereby comprising a capacitor with one movable plate. When a DC polarization voltage, *V_{P},* is applied across the plates of this system, an attractive electrostatic force between them is induced, causing the upper movable electrode to move downwards towards the bottom electrode, until equilibrium between the electrostatic force and mechanical restoring force of the suspensions is reached. At a certain bias voltage, the restoring force provided by the movable plate anchors no longer balances the electrostatic force and the structure becomes mechanically unstable, causing the top plate to spontaneously collapse onto the bottom electrode. This critical voltage is commonly referred to as the "pull-in voltage", *V_{PI},* and has been well documented in the literature.

This pull-in voltage limits the stable tuning voltage of parallel-plate varactors to 50%, and represents a serious drawback to the use of such devices in telecommunications applications. A number of methods of extending the tuning range have previously been explored.

US6744335 describes a MEMS tunable capacitor having a movable structure supported by anchors at both ends. There are three electrodes under the movable structure. Upon application of a tuning voltage across the structure and the outer electrodes the structure deflects so that the central portion of the structure and the central electrode form a tunable capacitor. The arrangement of the electrodes means that a capacitance tuning range of greater than 50% can be achieved.

A thesis "Design and Investigation of Microelectromechanical (MEMS) Varactors" of Maxim Shakhray, 2005, (Saint Petersburg State Polytechnical University, Saint Petersburg, Russia), describes arrangements in which the deflecting structure is cantilevered. It is pulled down in a first phase at its extremity by a starter electrode, and the remainder is deflected down to varying extents according to tuning voltage applied to a working electrode.

The invention is directed towards providing an improved MEMS varactor.

### Statements of Invention

According to the invention, there is provided a micromechanical capacitor, comprising:
a substrate;
at least one fixed capacitance electrode; and
a movable capacitance electrode disposed opposite said fixed capacitance electrode, such that these two electrodes form a capacitor;
   wherein the movable capacitance electrode may be deflected upon the application of electrostatic forces between the fixed capacitance electrode and the movable capacitance electrode to change the capacitance between the movable capacitance electrode and the fixed capacitance electrode.

In one embodiment, there are a plurality of resilient supports connected to the movable capacitance electrode such that the deflected shape of the movable capacitance electrode upon the application of electrostatic forces between the movable capacitance electrode and fixed capacitance electrode is defined by the characteristics of the resilient supports.

In one embodiment, the capacitor further comprises:
at least one fixed bias electrode, the movable capacitance electrode being disposed opposite said fixed bias electrode and the fixed capacitance electrode and suspended by a plurality of rigid and resilient supports, such that the movable capacitance electrode and the fixed capacitance electrode form a capacitor;
   wherein the supports allow:
   the selective deflection of the movable capacitance electrode into an arched shape defined by the characteristics of the resilient supports, the movable capacitance electrode, and the fixed bias electrode upon the application of electrostatic forces between the movable capacitance electrode and fixed bias electrode, and
   subsequent further deflection of the movable capacitance electrode upon the application of electrostatic forces between the movable capacitance electrode and fixed capacitance electrode;
   wherein these deflections change the capacitance between the movable capacitance electrode and the fixed capacitance electrode.

In one embodiment, the movable capacitance electrode is deformable so that it can repeatably deflect between a position lying flat over the substrate and an arched shape.

In one embodiment, the capacitor characteristics provide a tunable capacitance to optimise operation of a radio-frequency circuit at multiple frequencies and power levels.

In one embodiment, parts of the movable capacitance electrode deflect into contact with the substrate, fixed electrode or topography defined on these regions upon application of electrostatic forces between the movable electrode and the bias electrode, and the resilient supports limit the deflection of some parts of the movable electrode to a displacement less than that of other parts in contact in order to create an arched shape.

In one embodiment, the movable capacitance electrode is coupled to movable bias electrodes so that the movable capacitance electrode can be deflected by application of voltage between the fixed bias electrodes and the movable bias electrodes without voltage on the movable capacitance electrode.

In one embodiment, a part of the movable capacitance electrode opposite the fixed capacitance electrode has limited deflection after an electrostatic force is applied between the fixed electrodes and the movable electrode, and this part of the movable electrode can be further deflected towards the fixed capacitance electrode after application of electrostatic force between the fixed capacitance electrode and movable capacitance electrode.

In one embodiment, capacitance between the movable capacitance electrode and the fixed capacitance electrode is increased by applying electrostatic forces between the movable electrode and the fixed electrode; and this increase in capacitance is achieved by narrowing and lowering arched shape of the movable capacitance electrode.

In one embodiment, the electrostatic force required to achieve an increase in capacitance is defined by the characteristics of the resilient supports, the movable capacitance electrode, the fixed capacitance electrode, and the substrate topography.

In one embodiment, the capacitance is switchable during a first phase from an initial value to another intermediate value by application of electrostatic force between the fixed bias electrode and the movable capacitance electrode; and is further continuously tunable during a second phase to a final value by application of electrostatic force between the fixed capacitance electrode and movable capacitance electrode.

In one embodiment, the capacitor does not exhibit a pull-in instability during the tuning phase.

In one embodiment, the electrodes are configured so that steps of causing selective deflection of the movable capacitance electrode and tuning of the capacitor take place in multiple stages according to characteristics of the structure and of method of application of electrostatic forces between the electrodes.

In one embodiment, the movable capacitance electrode comprises a beam and the resilient support is located approximately mid-way along the beam.

In one embodiment, the distance between the opposing surfaces of said movable capacitance electrode and said fixed capacitance electrode are on the order of tenths to tens of micrometers.

In one embodiment, said fixed electrodes, said capacitance electrodes, and said movable electrode are fabricated from a combination of thin film metal and thin film insulator layers.

In one embodiment, the resilient support comprises an anchor and an arm extending from the anchor to the movable capacitance electrode.

In one embodiment, there is at least one pair of resilient supports on opposite lateral sides of the movable capacitance electrode.

In one embodiment, the forces needed to deflect the movable capacitance electrode and to tune the capacitor are defined by the geometrical shape of the movable capacitance electrode and of the bias electrode.

In another aspect, the invention provides a switchable, tunable micromechanical capacitor, comprising:
a substrate;
fixed bias electrode(s);
fixed capacitance electrode(s); and
a movable capacitance electrode disposed opposite both said fixed electrode(s) such that the movable capacitance electrode and the fixed capacitance electrode forms a capacitor;
   wherein the movable capacitance electrode has the shape of a beam, is supported at each end by rigid anchors attached to the substrate and is supported by resilient support(s) at approximately its mid-point;
   wherein there is a fixed capacitance electrode under the centre portion of the movable capacitance electrode, and additional fixed bias electrodes on both sides of the fixed capacitance electrode;
   wherein the movable capacitance electrode may be selectively switched into an arched shape defined by the characteristics of the resilient supports, the movable capacitance electrode, and the fixed bias electrode upon the application of electrostatic forces between the movable capacitance electrode and fixed bias electrode(s), and;
   wherein parts of the movable capacitance electrode deflect into contact with the substrate, fixed bias electrodes or topography defined on these regions upon application of electrostatic forces between the movable capacitance electrode and fixed bias electrodes, and the resilient supports limit the deflection of other parts of the movable capacitance electrode to a displacement less than that of the parts in contact, and
   the movable capacitance electrode may be subsequently further deflected upon the application of electrostatic forces between the movable capacitance electrode and fixed capacitance electrode, thereby tuning the value of the capacitance between the capacitance electrodes.

In another aspect, the invention provides a system comprising a plurality of micromechanical capacitors of any preceding claim, arranged so that multiple values of capacitance may be achieved by suitable switching or tuning of the capacitors as appropriate.

In one embodiment, the fixed or movable electrodes form part of an electrical circuit for transmission of electrical signals.

### Detailed Description of the Invention

The invention will be more clearly understood from the following description of some embodiments thereof, given by way of example only with reference to the accompanying drawings in which:-
Fig. 1 is a perspective view of a MEMS varactor of the invention.
Fig. 2 is a perspective view of the MEMS varactor of the invention where resilient supports lateral to the main device are used to define the deflection profile of the structure under an applied electrostatic force.
Fig. 3 is a perspective view of the MEMS varactor of the invention where the structure is fabricated as a planar structure supported by a combination of rigid and resilient supports and additional electrodes are added near the rigid supports to allow selective deflection of the planar movable electrode to form an arched movable electrode.
Figs. 4(a), 4(b), 5(a), 5(b), 6(a), 6(b), 7(a) and 7(b) show the varactor at various states for progressively increasing capacitance,
Fig. 8 is a plot of capacitance vs. tuning voltage (voltage applied between fixed and movable capacitance electrodes);
Fig. 9 is a set of plots showing electrode shape as a function of tuning voltage;
Fig. 10 is a plot of capacitance vs. actuation voltage (voltage between bias electrodes and movable electrode);
Figs. 11 and 12 are views of an alternative varactor of the invention;
Fig. 13 is a diagram of a system comprising an array of varactors of the invention; and
Figs. 14 and 15 are plots illustrating operation of the system.

### Overview

A switchable and tunable micromechanical capacitor comprises a substrate, fixed bias electrode(s); fixed capacitance electrode(s); and a movable capacitance electrode opposite the fixed bias and fixed capacitance electrodes. The movable capacitance electrode is suspended by rigid and resilient supports, such that it forms a capacitor together with the fixed capacitance electrode. The supports allow selective deflection of the movable capacitance electrode into an arched shape defined by the characteristics of the resilient supports, the movable electrode, and the fixed bias electrodes upon the application of electrostatic forces between the movable capacitance electrode and the fixed bias electrodes. There is further deflection of the arched, movable capacitance electrode upon the application of electrostatic forces between the movable capacitance electrode and fixed capacitance electrode(s). These deflections are used to modify the capacitance between the movable capacitance electrode and fixed capacitance electrode(s). The tunable capacitance may be used to optimise the operation of a radio-frequency circuit at multiple frequencies and power levels.

Parts of the movable electrode may be deflected into contact with the substrate, fixed electrode or topography defined on these regions, and the resilient supports limit the deflection of other parts of the movable electrode to a displacement less than that of the parts in contact in order to create an arched shape.

Alternatively, the movable capacitance electrode may be fabricated with an inherently arched shape, the ends of the arched shape being in contact with the substrate or topography defined on the substrate.

The movable capacitive electrode may be coupled to movable bias electrodes so that it can be deflected by application of voltage between fixed and movable bias electrodes without voltage on the movable capacitive electrode.

### Description of the Embodiments

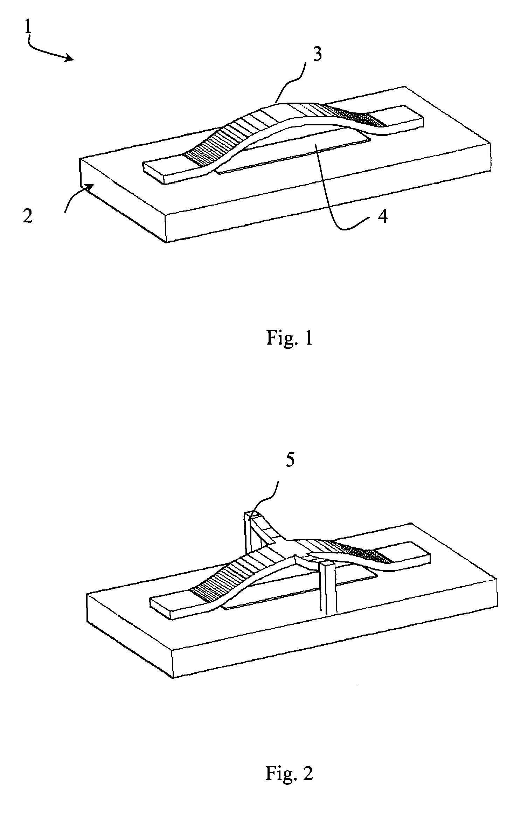

Referring to Fig. 1 a varactor 1 of the invention comprises a substrate 2 on which an arched movable capacitance electrode 3 is supported at its ends by the contact with the substrate 2 or topographical features on the substrate, and there is a fixed capacitance electrode 4 on the substrate 2 under the movable electrode 3. Application of electrostatic forces causes the electrode 3 to deflect so that the arch shape is lowered and narrowed until it is fully in contact with the fixed electrode 4.

Referring to Fig. 2 a varactor as illustrated in Fig. 1 with an additional pair of resilient supports 5 supporting the movable capacitance electrode 3 mid-way along its length. In this case, the supports 5 apply an additional level of control over the deflection of the movable capacitance electrode 3 towards the fixed capacitance electrode 4.

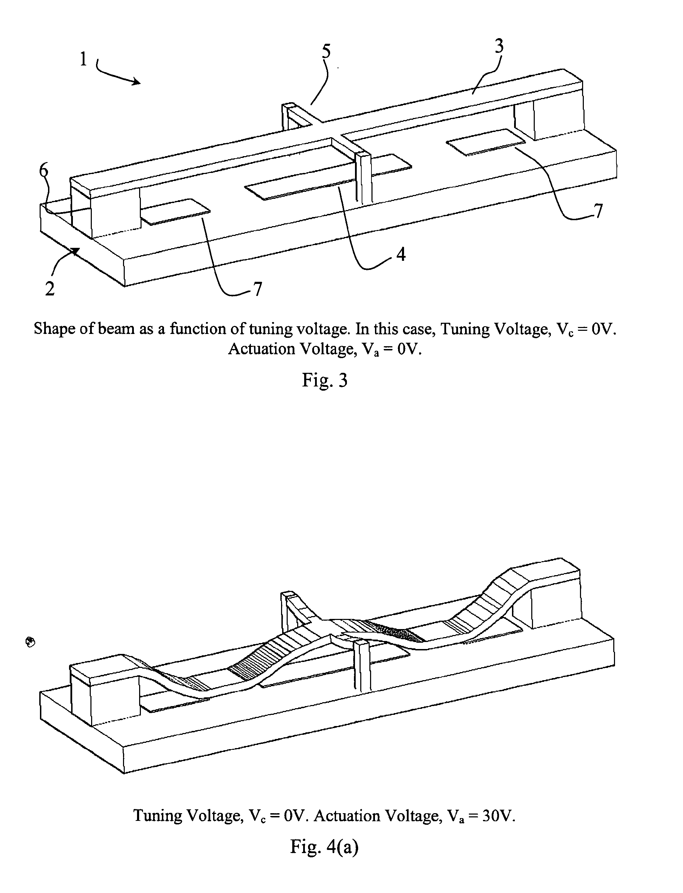

Referring to Fig. 3 a varactor 1 of the invention comprises a substrate 2 on which a movable capacitance electrode in the form of a beam 3 is supported at its ends by the rigid anchors 6, and there are two fixed bias electrodes 7 and a fixed capacitance electrode 4 under the movable electrode 3. There is a pair of resilient supports 5 providing additional support for the movable electrode 3 at its centre.

The preferred substrate material is silicon but may also comprise glass, GaAs or other. The substrate may have been previously worked on, e.g. it may contain CMOS circuitry or bulk micromachined components. The anchors 6 and the movable electrode 3 and the resilient supports 5 are surface micromachined from a conductive material such as aluminium, titanium, gold, or a composite layer such as aluminium/oxide. The electrodes 4, 7, are formed from a conductive metal and may be passivated with an insulating layer such as oxide or nitride.

The varactor 1 may be manufactured in an integrated process by carrying out the deposition, etch and selective removal of a series of thin films. This is done using semiconductor-related photolithographic processes obvious to those skilled in the art.

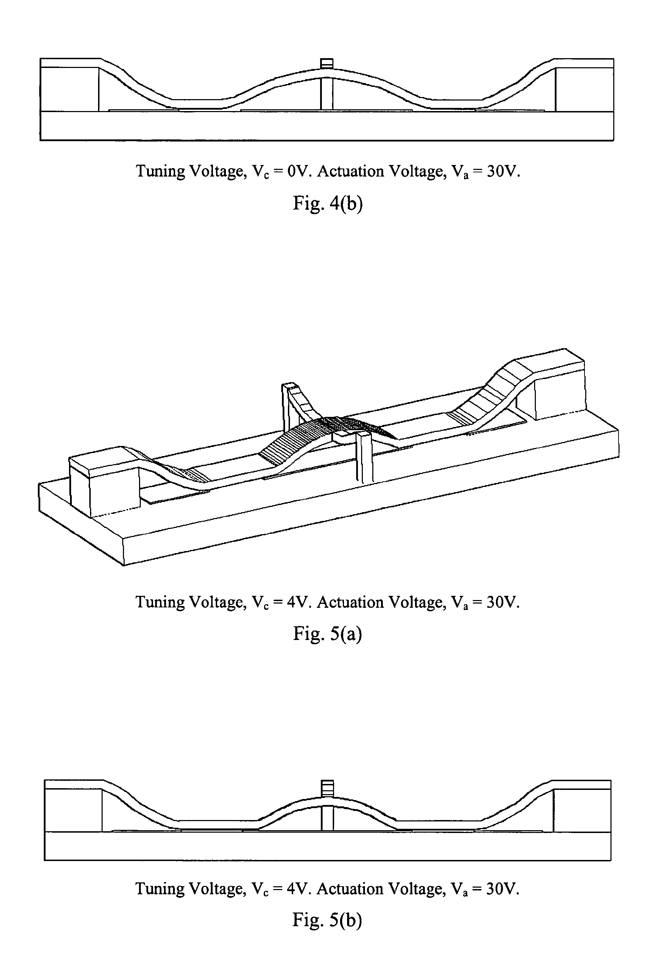

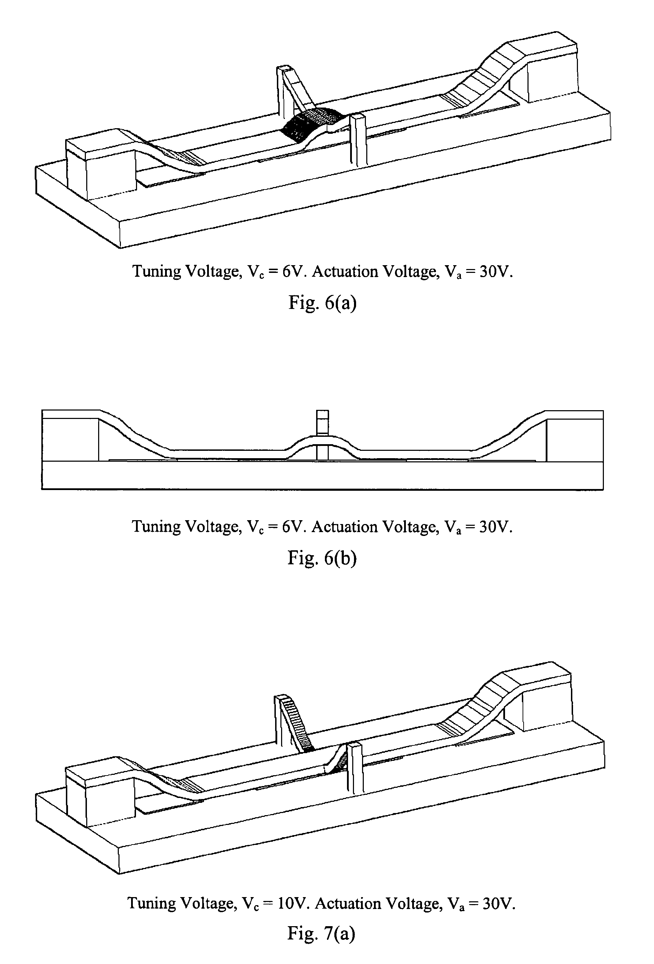

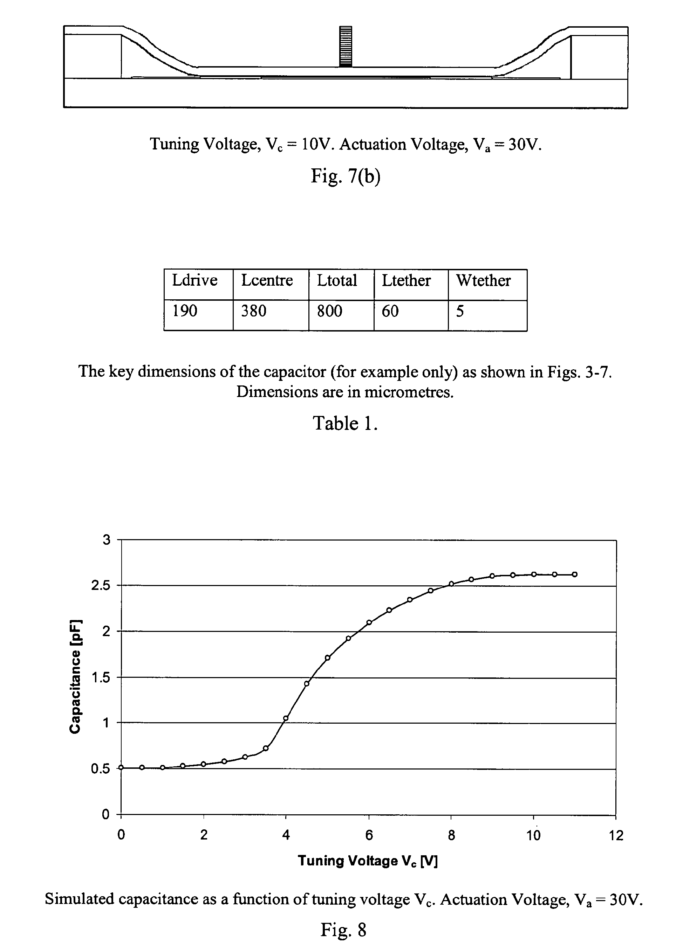

Operation of the varactor shown in Fig.1, Fig. 2 is the same as for the varactor shown in Fig.3 after sufficient voltage has been applied between the fixed bias electrodes 7, located near the rigid anchors, and the movable electrode 3 to cause the movable electrode to deflect to the arched shape shown in Fig. 4(a). The device operation is illustrated in Figs. 4 to 7. The device capacitance is measured between the fixed capacitance electrode 4 and the movable capacitance electrode 3. The tuning voltage is applied between the fixed capacitance electrode 4 and the movable capacitance electrode 3. As the tuning voltage increases the capacitance between the fixed capacitance electrode 4 and the movable capacitance electrode 3 increases, and the increase is achieved by a combination of the reduction of the maximum gap between the arched, movable capacitance electrode 3 and fixed capacitance electrode 4 and an increase in the fraction of the movable electrode 3 which is in contact with the substrate 2 or the fixed capacitive electrode 4 or some layers interposed between the movable electrode 3 and the substrate 2 and the fixed capacitive electrode 4. At maximum tuning voltage the arched portion of the movable electrode 3 is completely deflected into contact with the substrate 2, the fixed capacitive electrode 4 or some layers interposed between the electrode 3 and the substrate 2 and the fixed capacitance electrode 4. This is illustrated in Fig. 7(a) and 7(b).

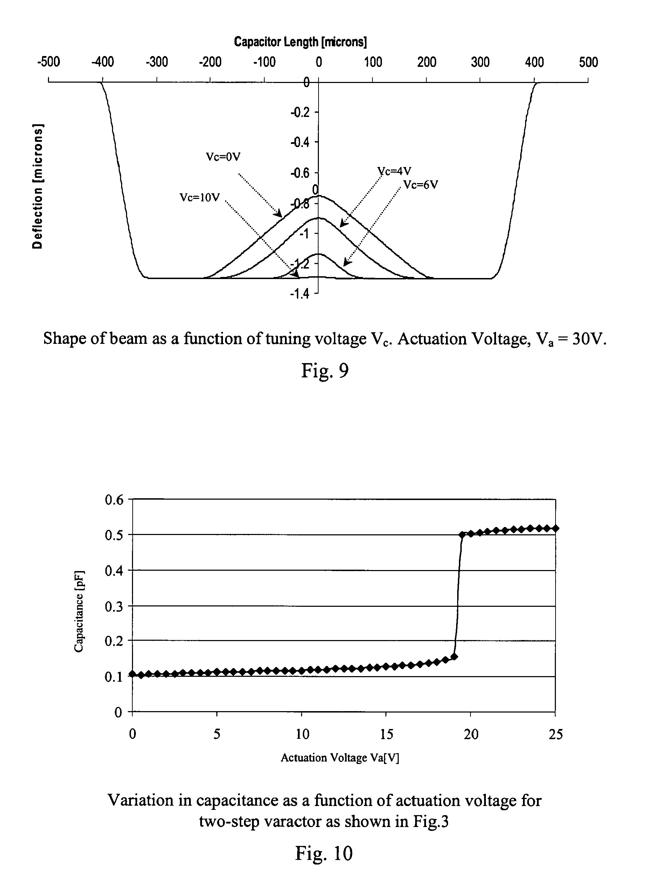

Referring to Figs. 8 and 9, it is clear that the structure of the varactor provides a much larger capacitance range than a parallel plate model, from 0.5pF to 2.6pF corresponding to a tuning voltage range of 10V.

In more detail, the structure shown in Fig.3 operates as a two-step tunable capacitor where in the first step of operation, a DC actuation voltage in excess of the pull-in voltage is applied between the fixed bias electrodes 7 and the movable electrode 3. The resultant electrostatic force causes the movable electrode 3 to pull-in over the electrodes 7. When the movable electrode 3 is pulled down over the actuation electrode 7 the resilient supports 5 perpendicular to the movable electrode restrain the centre of the movable electrode from deflecting to contact the surface resulting in an arched-shaped electrode as shown in Fig. 4. The change in the capacitance between the movable capacitance electrode and the fixed capacitance electrode as the applied actuation voltage is increased from 0V to a voltage in excess of the pull-in voltage is shown in Fig. 10. In the second step of operation, as a two-phase tunable capacitor, a tuning voltage is applied, as described above, between the fixed capacitance electrode 4 and the movable electrode 3 to deflect the arch-shaped centre region of the movable electrode 3, changing the capacitance between the movable electrode 3 and the fixed capacitance electrode 4. The change in capacitance as a result of increasing tuning voltage is shown Fig. 8.

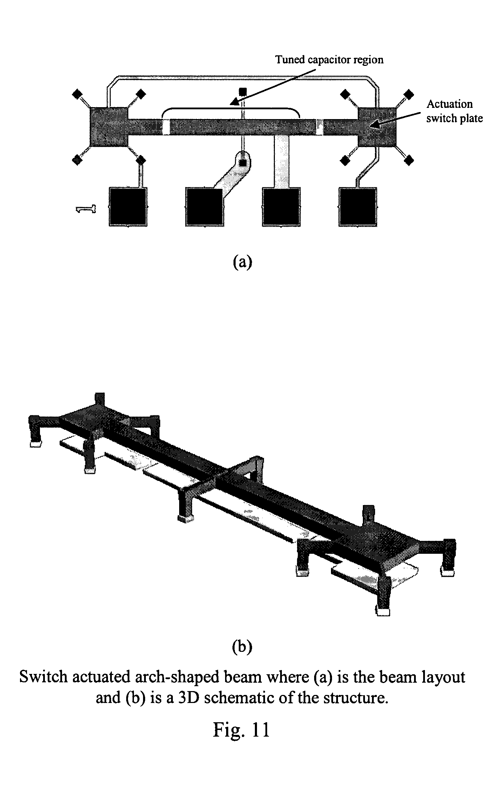

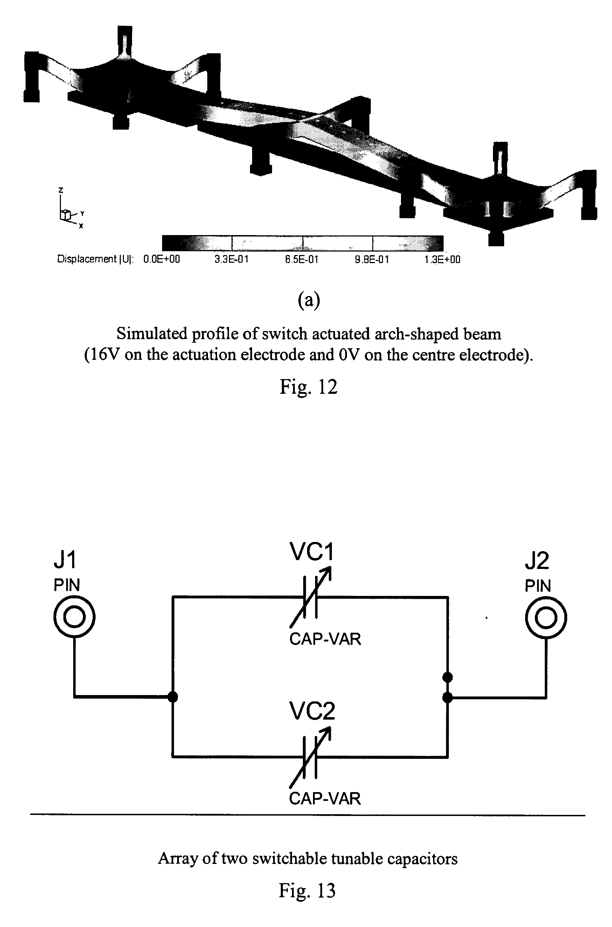

An alternative tunable capacitor can reduce the voltage required for actuation by separating the actuation area and tunable capacitance area. Figs. 11 and 12 show the layout and 3D schematic of the structure. In this device the movable electrode is actuated into the arch-shaped position by applying an actuation voltage to switch structures connected to each end of the movable electrode. The switch structure dimensions are required to exert sufficient force on the movable electrode to actuate it to the arch-shaped position. This allows more flexibility in the design of actuation and tunable capacitance parts of the structure. The device actuation is determined by the switch plate area and support tether characteristics and by the length and width of the movable electrode. The required tunable capacitance characteristic can be achieved by setting the movable electrode length and width, the length of the lower centre electrode and the dimensions of the centre resilient supports.

The movable capacitance electrode in this example is in the form of a beam that has a length of 600µm and width of 40µm with 100x100µm² switch plates supported by four tethers of length and width 35µm and 5µm respectively. The tuned capacitor has a length of 390µm and the centre support tethers are 60µm in length and 10µm in width. The structure dimensions can be designed to modify the actuation voltage, base capacitance and tuning characteristic of the device.

After actuation to the arch-shaped profile, with an actuation voltage of 20V, with no voltage applied to the centre electrode, the beam profile is shown in Fig. 11.

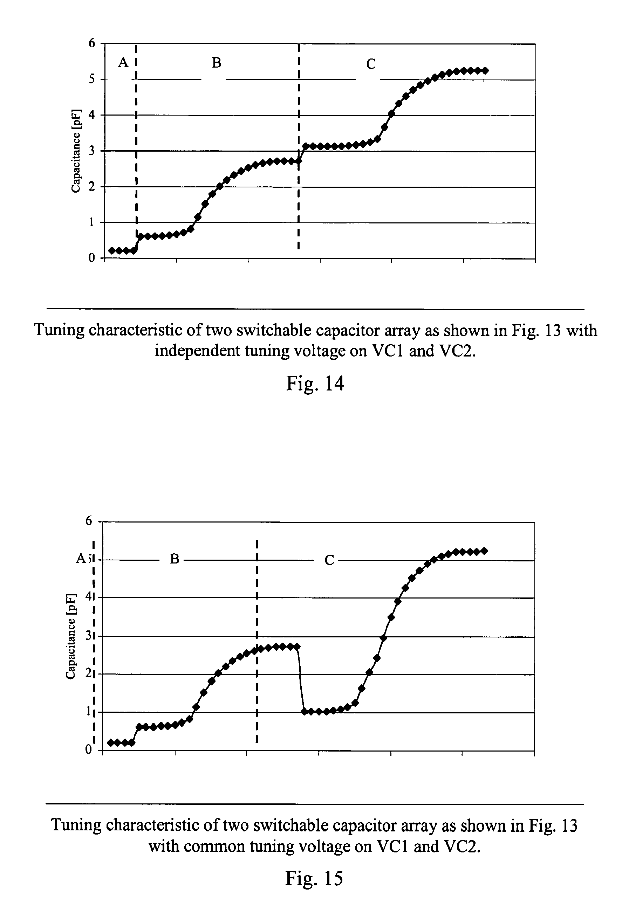

The two-step tunable capacitor can be integrated in an array of tuned capacitor elements by connecting capacitors in parallel as shown in Fig. 13. If the capacitors VC1 and VC2 of fig. 13 have the tuning and switched capacitance characteristics of the Fig. 8 and Fig. 10 respectively and have independent tuning voltage control then the combined capacitors could have the tuning characteristic shown in Fig. 14. In this figure the phase of operation indicated as A represents the capacitance of the capacitor pair with both VC1 and VC2 in the up position (i.e. no actuation voltage applied to the devices). With an actuation voltage applied to VC1 the capacitance of the combined capacitive pair can be tuned by varying the tuning voltage applied to VC1 as shown in phase B. If the actuated VC1 has a maximum tuning voltage applied and VC2 is actuated and has its tuning voltage gradually increased the capacitance of the combination can be tuned as shown in Phase C. If the capacitors VC1 and VC2 have a common tuning voltage then the capacitance tuning operates in the same phases A, B and C but has the characteristic shown in Fig. 15.

The invention offers a micromechanical varactor realised using a novel structure that can be integrated in an RF system to tune the frequency of Local Oscillators (LO), to tune filters and antennae, to optimise the impedance match between circuit stages over a range of frequencies and to allow antenna optimisation. The device also exhibits advantages over existing devices as it has characteristics such as:
- low tuning voltage
- high tuning range
- high quality factor
- high base capacitance
- low harmonic distortion, as the device inertia prevents it from responding to RF frequencies
- low sensitivity to residual stress and temperature
- inherently switched operation which allows for operation in arrays as described in this document
- no pull-in instability over the complete range of operation
- the device may be fabricated on the same substrate as other passive or active components or may be integrated in a multi-chip system
- the device is suitable for wafer scale packaging

The performance of the capacitor in RF applications may be for efficient RF power transfer through impedance matching with input and output stages.

The invention is not limited to the embodiments described but may be varied in construction and detail.

## Claims

1. A micromechanical capacitor, comprising:
a substrate;
at least one fixed capacitance electrode; and
a movable capacitance electrode disposed opposite said fixed capacitance electrode, such that these two electrodes form a capacitor;
wherein the movable capacitance electrode may be deflected upon the application of electrostatic forces between the fixed capacitance electrode and the movable capacitance electrode to change the capacitance between the movable capacitance electrode and the fixed capacitance electrode.

2. A micromechanical capacitor as claimed in claim 1, wherein there are a plurality of resilient supports connected to the movable capacitance electrode such that the deflected shape of the movable capacitance electrode upon the application of electrostatic forces between the movable capacitance electrode and fixed capacitance electrode is defined by the characteristics of the resilient supports.

3. A micromechanical capacitor as claimed in claim 2, further comprising:
at least one fixed bias electrode, the movable capacitance electrode being disposed opposite said fixed bias electrode and the fixed capacitance electrode and suspended by a plurality of rigid and resilient supports, such that the movable capacitance electrode and the fixed capacitance electrode form a capacitor;
wherein the supports allow:
the selective deflection of the movable capacitance electrode into an arched shape defined by the characteristics of the resilient supports, the movable capacitance electrode, and the fixed bias electrode upon the application of electrostatic forces between the movable capacitance electrode and fixed bias electrode, and
subsequent further deflection of the movable capacitance electrode upon the application of electrostatic forces between the movable capacitance electrode and fixed capacitance electrode;
wherein these deflections change the capacitance between the movable capacitance electrode and the fixed capacitance electrode.

4. A micromechanical capacitor as claimed in any preceding claim, wherein the movable capacitance electrode is deformable so that it can repeatably deflect between a position lying flat over the substrate and an arched shape; and wherein the capacitor characteristics provide a tunable capacitance to optimise operation of a radio-frequency circuit at multiple frequencies and power levels.

5. A micromechanical capacitor as claimed in either of claims 3 or 4, wherein parts of the movable capacitance electrode deflect into contact with the substrate, fixed electrode or topography defined on these regions upon application of electrostatic forces between the movable electrode and the bias electrode, and the resilient supports limit the deflection of some parts of the movable electrode to a displacement less than that of other parts in contact in order to create an arched shape.

6. A micromechanical capacitor as claimed in any preceding claim, wherein capacitance between the movable capacitance electrode and the fixed capacitance electrode is increased by applying electrostatic forces between the movable electrode and the fixed electrode; and this increase in capacitance is achieved by narrowing and lowering arched shape of the movable capacitance electrode.

7. A micromechanical capacitor as claimed in any preceding claim, wherein the capacitance is switchable during a first phase from an initial value to another intermediate value by application of electrostatic force between the fixed bias electrode and the movable capacitance electrode; and is further continuously tunable during a second phase to a final value by application of electrostatic force between the fixed capacitance electrode and movable capacitance electrode.

8. A capacitor as claimed in any preceding claim, wherein the distance between the opposing surfaces of said movable capacitance electrode and said fixed capacitance electrode are on the order of tenths to tens of micrometers.

9. A capacitor as claimed in any preceding claim, wherein said fixed electrodes, said capacitance electrodes, and said movable electrode are fabricated from a combination of thin film metal and thin film insulator layers.

10. A capacitor as claimed in any of claims 3 to 9, wherein the resilient support comprises at least one anchor and an arm extending from the anchor to the movable capacitance electrode.
